# EUROPÄISCHE PATENTSCHRIFT

(11) **EP 3 556 594 B1**
(45) Veröffentlichungstag und Bekanntmachung des Hinweises auf die Patenterteilung: **23.12.2020**
(21) Anmeldenummer: 19163432.8
(22) Anmeldetag: 18.03.2019
(51) Int. Cl.: B60L 3/00, B60L 9/18, B60L 50/53

(54) **VERFAHREN ZUM BETREIBEN EINES FAHRZEUGS SOWIE FAHRZEUG**
VEHICLE AND METHOD FOR OPERATING A VEHICLE
PROCÉDÉ DE FONCTIONNEMENT D'UN VÉHICULE AINSI QUE VÉHICULE

(30) Priorität: 17.04.2018 DE 102018205837
(43) Veröffentlichungstag der Anmeldung: 23.10.2019
(73) Patentinhaber: Siemens Mobility GmbH, 81739 München (DE)
(72) Erfinder: Burg, Wilhelm, 96052 Bamberg (DE); Haßler, Stefan, 91281 Kirchenthumbach OT Neuzirkendorf (DE); Wirth, Heiko, 96231 Bad Staffelstein (DE)

(56) Entgegenhaltungen:
- EP-A1- 2 738 034
- EP-A1- 2 875 982
- DE-T5-112013 006 718
- JP-A- 2010 252 617
- Raja Masood Larik ET AL: "Under Voltage Load Shedding Scheme to Provide Voltage Stability", 4th International Conference on Energy, Environment and Sustainable Development 2016 (EESD 2016) , 15. November 2016 (2016-11-15), Seiten 1-9, XP055620185, Gefunden im Internet: URL:https://www.researchgate.net/profile/R aja_Masood_Larik/publication/314091761_Und er_Voltage_Load_Shedding_Scheme_to_Provide _Voltage_Stability/links/58b5263792851cf7a e94277f/Under-Voltage-Load-Shedding-Scheme -to-Provide-Voltage-Stability.pdf [gefunden am 2019-09-09]

## Beschreibung

Die Erfindung betrifft ein Verfahren zum Betreiben eines Fahrzeugs, bei dem das Fahrzeug eine erste und eine zweite Traktionsanlage mit jeweils mindestens einem elektrischen Traktionsmotor aufweist und eine von einer Fahrleitung bereitgestellte Netzspannung überwacht wird, wobei die Netzspannung zunächst mindestens so groß ist wie ein vorgegebener Spannungsschwellwert und dann auf einen Spannungswert abfällt, der unterhalb des vorgegebenen Spannungsschwellwerts liegt. Ferner betrifft die Erfindung ein Fahrzeug, welches eine erste und eine zweite Traktionsanlage, die jeweils mindestens einen elektrischen Traktionsmotor aufweisen, sowie eine Messvorrichtung zum Überwachen einer von einer Fahrleitung, insbesondere einer Oberleitung oder einer Stromschiene, bereitgestellten Netzspannung umfasst.

In elektrischen Netzen zur Versorgung von Fahrzeugen mit elektrischer Energie kann es insbesondere an höher belasteten Streckenabschnitten zu einem Abfall der Netzspannung kommen. Vor allem DC-Netze sind für dieses Problem anfällig, aber auch bei AC-Netzen kann dieses Problem auftreten. Wenn keine Stromversorgung über die Oberleitung verfügbar ist, wird die Stromversorgung in einigen bekannten Schienenfahrzeuge von einer Bordbatterie geliefert. Dies ist in der Patentveröffentlichung EP 2738034 A1 (Mitsubishi Electric) offenbart.

Ein Netzspannungsabfall kann dazu führen, dass ein Fahrzeug weniger elektrische Leistung aus einer Fahrleitung beziehen kann, was sich negativ auf die Traktionsleistung des Fahrzeugs auswirken kann und letztlich dazu führen kann, dass das Fahrzeug einen vorgegebenen Fahrplan nicht einhalten kann. Eine Aufgabe der Erfindung ist es, einen Betrieb eines Fahrzeugs zu ermöglichen, bei dem die Traktionsleistung des Fahrzeugs im Falle eines Netzspannungsabfalls zumindest temporär stabil bleibt.

Diese Aufgabe wird erfindungsgemäß gelöst durch ein Verfahren nach Anspruch 1 sowie durch ein Fahrzeug nach Anspruch 9. Vorteilhafte Weiterbildungen der Erfindung sind Gegenstand der abhängigen Patentansprüche sowie der nachfolgenden Beschreibung.

Bei dem erfindungsgemäßen Verfahren zum Betreiben eines Fahrzeugs weist das Fahrzeug eine erste und eine zweite Traktionsanlage mit jeweils mindestens einem elektrischen Traktionsmotor auf. Es wird eine von einer Fahrleitung bereitgestellte Netzspannung überwacht, wobei die Netzspannung zunächst mindestens so groß ist wie ein vorgegebener Spannungsschwellwert und dann auf einen Spannungswert abfällt, der unterhalb des vorgegebenen Spannungsschwellwerts liegt. Erfindungsgemäß ist vorgesehen, dass beide Traktionsanlagen elektrisch an die Fahrleitung gekoppelt sind, während die Netzspannung mindestens so groß ist wie der vorgegebene Spannungsschwellwert. Weiter ist erfindungsgemäß vorgesehen, dass bei oder nach Abfall der Netzspannung auf den unterhalb des vorgegebenen Spannungsschwellwerts liegenden Spannungswert die erste Traktionsanlage elektrisch an die Fahrleitung gekoppelt bleibt und mit elektrischer Energie aus der Fahrleitung versorgt wird, wohingegen die zweite Traktionsanlage elektrisch von der Fahrleitung entkoppelt wird und von einem Energiespeicher des Fahrzeugs mit elektrischer Energie versorgt wird.

Die Erfindung beruht auf der Überlegung, dass bei einem Fahrzeug, welches einen Energiespeicher aufweist, der elektrische Energie bereitstellt, eine Abnahme der Traktionsleistung des Fahrzeugs im Falle eines Netzspannungsabfalls zumindest temporär verhindert werden kann, indem die vom Energiespeicher bereitgestellte elektrische Energie genutzt wird, um das Fahrzeug anzutreiben. Der Energiespeicher ermöglicht es also, die Traktionsleistung des Fahrzeugs im Falle eines Netzspannungsabfalls zumindest temporär stabil zu halten.

Weiter beruht die Erfindung auf der Erkenntnis, dass es bei einem mit einem Energiespeicher ausgestatteten Fahrzeug, das eine erste und eine zweite Traktionsanlage aufweist, im Falle eines Netzspannungsabfalls möglich ist, die erste Traktionsanlage mit vom Energiespeicher bereitgestellter elektrischer Energie zu versorgen, während die zweite Traktionsanlage mit elektrischer Energie aus der Fahrleitung versorgt werden kann. Die erste Traktionsanlage kann die über die Fahrleitung zur Verfügung gestellte Energie nutzen, um - ohne Energie aus dem Energiespeicher beziehen zu müssen - ihre Traktionsleistung aufrechtzuerhalten. Die Traktionsleistung der zweiten Traktionsanlage hingegen kann mithilfe der vom Energiespeicher bereitgestellten elektrischen Energie aufrechterhalten werden.

Wenn, wie bei Erfindung vorgesehen, die zweite Traktionsanlage im Falle eines Netzspannungsabfalls elektrisch von der Fahrleitung entkoppelt wird, wird verhindert, dass die vom Energiespeicher bereitgestellte elektrische Energie in die Fahrleitung fließen kann, wo diese Energie beispielsweise von anderen Fahrzeugen aufgebraucht werden kann. Durch die Entkopplung der zweiten Traktionsanlage von der Fahrleitung kann eine größere Menge an Energie aus dem Energiespeicher zur Aufrechterhaltung der Traktionsleistung der zweiten Traktionsanlage genutzt werden. Dies hat zur Folge, dass die im Energiespeicher gespeicherte Energie über eine längere Fahrstrecke hinweg zur Aufrechterhaltung der Traktionsleistung der zweiten Traktionsanlage genutzt werden kann. Zudem wird durch besagte Entkopplung der zweiten Traktionsanlage verhindert, dass die zweite Traktionsanlage die Fahrleitung belastet. Indem die erste Traktionsanlage, wie bei der Erfindung vorgesehen, im Falle eines Netzspannungsabfalls elektrisch an die Fahrleitung gekoppelt bleibt, kann die erste Traktionsanlage die verbleibende Leistungskapazität der Fahrleitung (voll) ausnutzen.

Ferner ist ein Vorteil der Erfindung, dass die erste und die zweite Traktionsanlage unabhängig voneinander geregelt werden können, wenn die zweite Traktionsanlage elektrisch von der Fahrleitung entkoppelt ist und mit elektrischer Energie, die vom Energiespeicher des Fahrzeugs bereitgestellt wird, versorgt wird. Dies ermöglicht eine bessere Ausnutzung der vom Energiespeicher zur Verfügung gestellten Energie.

Im Sinne der Erfindung ist eine Vorrichtung elektrisch an eine andere Vorrichtung gekoppelt, wenn eine elektrische Energieübertragung zwischen diesen beiden Vorrichtungen möglich ist. Entsprechend sind im Sinne der Erfindung zwei Vorrichtungen elektrisch voneinander entkoppelt, wenn eine elektrische Energieübertragung zwischen den beiden Vorrichtungen nicht möglich ist.

Ist die jeweilige Traktionsanlage des Fahrzeugs elektrisch an die Fahrleitung gekoppelt, kann die jeweilige Traktionsanlage elektrische Energie aus der Fahrleitung beziehen. In dem Zustand, in dem beide Traktionsanlagen elektrisch an die Fahrleitung gekoppelt sind, werden die beiden Traktionsanlagen vorzugsweise mit elektrischer Energie aus der Fahrleitung versorgt.

Wenn die zweite Traktionsanlage elektrisch von der Fahrleitung entkoppelt ist, ist die zweite Traktionsanlage zweckmäßigerweise elektrisch an besagten Energiespeicher gekoppelt. Die erste Traktionsanlage hingegen ist in diesem Fall vorteilhafterweise vom Energiespeicher entkoppelt. Dadurch kann verhindert werden, dass die vom Energiespeicher bereitgestellte elektrische Energie über eine Leitung, die mit der ersten Traktionsanlage sowie mit der Fahrleitung verbunden ist, in die Fahrleitung fließen kann.

Bei der Fahrleitung kann es sich beispielsweise um eine Oberleitung oder eine Stromschiene handeln. Die von der Fahrleitung bereitgestellte Netzspannung kann eine Gleichspannung oder eine Wechselspannung sein. In dem Fall, dass die von der Fahrleitung bereitgestellte Netzspannung eine Wechselspannung ist, können sich die Begriffe "Spannungswert" und "Spannungsschwellwert" auf einen Spannungseffektivwert oder eine Spannungsamplitude beziehen.

Zur Überwachung der Netzspannung wird zweckmäßigerweise eine fahrzeugseitige Messvorrichtung eingesetzt. Diese kann zum Beispiel mit einem Stromabnehmer des Fahrzeugs verbunden sein.

Die Traktionsanlagen des Fahrzeugs umfassen vorzugsweise jeweils einen Traktionsstromrichter, der mit dem/den Traktionsmotor(en) der jeweiligen Traktionsanlage verbunden ist. Bei den Traktionsmotoren des Fahrzeugs kann es sich um Wechselstrommotoren, wie zum Beispiel Synchronmotoren oder Drehstrom-Asynchronmotoren, handeln. Alternativ kann es sich bei den Traktionsmotoren um Gleichstrommotoren handeln.

Zusätzlich zu den beiden besagten Traktionsanlagen kann das Fahrzeug weitere Traktionsanlagen umfassen. Der Einfachheit halber beschränkt sich Beschreibung im Folgenden auf die beiden erwähnten Traktionsanlagen.

Der besagte Energiespeicher kann eine galvanische Zelle oder eine Zusammenschaltung mehrerer, insbesondere gleichartiger galvanischer Zellen umfassen. Alternativ oder zusätzlich kann der Energiespeicher einen Kondensator, wie zum Beispiel einen sogenannten Superkondensator, oder eine Zusammenschaltung mehrerer, insbesondere gleichartiger Kondensatoren umfassen.

Weiterhin ist es möglich, dass der Energiespeicher ein Schwungrad umfasst. In diesem Fall umfasst der Energiespeicher zweckmäßigerweise zusätzlich einen Elektromotor, der an das Schwungrad gekoppelt/koppelbar ist und als Generator betreibbar ist. Unter Verwendung elektrischer Energie kann der Elektromotor das Schwungrad antreiben. Das Schwungrad kann die Energie, die es vom Elektromotor aufnimmt, als Rotationsenergie speichern. Umgekehrt kann das Schwungrad, wenn der Energiespeicher elektrische Energie bereitstellen soll, seine Rotationsenergie nutzen, um den Elektromotor in dessen Generatorbetrieb anzutreiben.

Des Weiteren kann das Fahrzeug einen Trennschalter aufweisen. Die zweite Traktionsanlage kann beispielsweise mithilfe des Trennschalters elektrisch von der Fahrleitung entkoppelt werden, insbesondere indem der Trennschalter geöffnet wird.

In bevorzugter Weise umfasst das Fahrzeug einen ersten Stromabnehmer zum Versorgen der ersten Traktionsanlage mit elektrischer Energie aus der Fahrleitung. Ferner kann das Fahrzeug einen zweiten Stromabnehmer zum Versorgen der zweiten Traktionsanlage mit elektrischer Energie aus der Fahrleitung aufweisen. Die beiden Stromabnehmer können beispielsweise über eine Verbindungsleitung miteinander verbunden sein.

Vorteilhafterweise wird die erste Traktionsanlage über beide Stromabnehmer mit elektrische Energie aus der Fahrleitung versorgt, wenn die zweite Traktionsanlage elektrisch von der Fahrleitung entkoppelt ist. Dies ist insbesondere vorteilhaft, wenn die Netzspannung stark einbricht. Durch die Nutzung beider Stromabnehmer kann die erste Traktionsanlage - verglichen mit dem Fall, dass die erste Traktionsanlage vom zweiten Stromabnehmer getrennt ist/wird - einen höheren Strom aus der Fahrleitung ziehen.

Bei einer anderen Ausführungsvariante der Erfindung kann das Fahrzeug zum Beispiel für beide Traktionsanlagen nur einen gemeinsamen Stromabnehmer zum Versorgen der Traktionsanlagen mit elektrischer Energie aus der Fahrleitung aufweisen. In diesem Fall können die beiden Traktionsanlagen über den gemeinsamen Stromabnehmer mit elektrischer Energie aus der Fahrleitung versorgt werden, wenn die beiden Traktionsanlagen elektrisch an die Fahrleitung gekoppelt sind.

Vorteilhafterweise ist der zuvor erwähnte Energiespeicher ein wiederaufladbarer Energiespeicher. Es kann vorgesehen sein, dass der Energiespeicher mittels elektrischer Energie aus der Fahrleitung geladen wird, falls die zweite Traktionsanlage elektrisch an die Fahrleitung gekoppelt ist.

Ferner kann vorgesehen sein, dass der Energiespeicher während eines Bremsvorgangs des Fahrzeugs mittels elektrischer Bremsenergie geladen wird. Insbesondere kann der Energiespeicher während eines Bremsvorgangs des Fahrzeugs geladen werden, der erfolgt, wenn die zweite Traktionsanlage elektrisch von der Fahrleitung entkoppelt ist. Alternativ oder zusätzlich kann der Energiespeicher während eines Bremsvorgangs des Fahrzeugs geladen werden, der erfolgt, wenn die zweite Traktionsanlage elektrisch an die Fahrleitung gekoppelt ist.

Die Bremsenergie kann mithilfe der ersten und/oder der zweiten Traktionsanlage gewonnen werden, insbesondere indem die erste und/oder die zweite Traktionsanlage als elektrische Bremse (d. h. im Generatorbetrieb) betrieben wird.

In dem Fall, dass der Energiespeicher ein Schwungrad aufweist, kann das Aufladen des Energiespeichers ein Erhöhen der Rotationsenergie des Schwungrads, insbesondere durch ein Antreiben des Schwungrads mittels eines Elektromotors, umfassen. Umgekehrt kann das Entladen des Energiespeichers ein Verringern der Rotationsenergie des Schwungrads im Zuge einer Umwandlung der Rotationsenergie in elektrische Energie umfassen.

Falls die auf den unterhalb des vorgegebenen Spannungsschwellwerts liegenden Spannungswert abgefallene Netzspannung wieder auf einen Spannungswert steigt, der mindestens so groß ist wie der vorgegebene Spannungsschwellwert, wird die von der Fahrleitung entkoppelte zweite Traktionsanlage vorzugsweise wieder an die Fahrleitung gekoppelt. Dies ermöglicht es, die zweite Traktionsanlage mit elektrischer Energie aus der Fahrleitung zu versorgen, sodass der Verbrauch an im Energiespeicher gespeicherter Energie gering gehalten werden kann.

In einer vorteilhaften Ausführungsform der Erfindung wird die zweite Traktionsanlage, falls die Netzspannung unterhalb des vorgegebenen Spannungsschwellwerts liegt und zudem ein vorgegebenes Umschaltkriterium erfüllt ist, wieder elektrisch an die Fahrleitung gekoppelt und mit elektrischer Energie aus der Fahrleitung versorgt. Weiter ist es vorteilhaft, wenn in diesem Fall die erste Traktionsanlage elektrisch von der Fahrleitung entkoppelt wird und von einem weiteren Energiespeicher des Fahrzeugs mit elektrischer Energie versorgt wird.

Die weiten oben im Zusammenhang mit dem erstgenannten Energiespeicher genannten Ausgestaltungsmöglichkeiten können sich auch auf den weiteren Energiespeicher beziehen. Insbesondere können der erstgenannte Energiespeicher und der weitere Energiespeicher zueinander identisch ausgebildet sein.

Das besagte Umschaltkriterium kann beispielsweise eine Bedingung bezüglich eines Ladezustands des erstgenannten Energiespeichers sein. Zum Beispiel kann das Umschaltkriterium erfüllt sein, wenn der Ladezustand des Energiespeichers einen vorgegebenen Ladezustandsschwellwert unterschreitet. Auf diese Weise kann die Energie aus dem weiteren Energiespeicher genutzt werden, um die Traktionsleistung des Fahrzeugs aufrechtzuerhalten, wenn der Ladezustand des erstgenannten Energiespeichers den vorgegebenen Ladezustandsschwellwert unterschritten hat.

Neben einem Verfahren zum Betreiben eines Fahrzeugs betrifft die Erfindung, wie eingangs erwähnt, ein Fahrzeug. Das erfindungsgemäße Fahrzeug umfasst eine erste und eine zweite Traktionsanlage, die jeweils mindestens einen elektrischen Traktionsmotor aufweisen, sowie eine Messvorrichtung zum Überwachen einer von einer Fahrleitung bereitgestellten Netzspannung. Ferner umfasst das erfindungsgemäße Fahrzeug einen Energiespeicher sowie eine Steuereinheit. Die Steuereinheit ist dazu eingerichtet, das Fahrzeug so zu steuern, dass ausgehend von einem Ausgangszustand, in dem die Netzspannung mindestens so groß ist wie ein vorgegebener Spannungsschwellwert und beide Traktionsanlagen elektrisch an die Fahrleitung gekoppelt sind, bei oder nach Abfall der Netzspannung auf einen unterhalb des vorgegebenen Spannungsschwellwerts liegenden Spannungswert die erste Traktionsanlage elektrisch an die Fahrleitung gekoppelt bleibt und die zweite Traktionsanlage elektrisch von der Fahrleitung entkoppelt wird, sodass die erste Traktionsanlage mit elektrischer Energie aus der Fahrleitung versorgbar ist und die zweite Traktionsanlage vom Energiespeicher mit elektrischer Energie versorgbar ist.

Bei dem erfindungsgemäßen Fahrzeug kann es sich insbesondere um das im Zusammenhang mit dem erfindungsgemäßen Verfahren genannte Fahrzeug handeln. Weiter oben im Zusammenhang mit dem erfindungsgemäßen Verfahren beschriebene Ausführungsformen, Ausführungsdetails und Vorteile können sich auch auf das erfindungsgemäße Fahrzeug beziehen.

Das Fahrzeug kann zum Beispiel ein Schienenfahrzeug, insbesondere ein Schienenfahrzeug mit Stahlrädern oder mit gasgefüllten Reifen, sein. Alternativ kann das Fahrzeug beispielsweise ein Oberleitungsbus sein.

Im Sinne der vorliegenden Erfindung kann sich der Begriff "Fahrzeug" auf einen einzelnen Wagen oder mehrere aneinander gekoppelte Wagen beziehen.

Falls es sich bei dem Fahrzeug um ein Schienenfahrzeug handelt, kann das Fahrzeug beispielsweise mindestens einen Triebwagen und/oder mindestens eine Lokomotive umfassen. Zusätzlich zu dem/den Triebwagen oder der/den Lokomotive(n) kann das Fahrzeug einen oder mehrere nicht angetriebene Wagen umfassen.

Wenn das Fahrzeug mehrere Wagen umfasst, können die zuvor genannten Traktionsanlagen in unterschiedlichen Wagen des Fahrzeugs oder in demselben Wagen des Fahrzeugs angeordnet sein.

Die zuvor erwähnte Messvorrichtung kann eine Komponente der Steuereinheit sein. Alternativ kann die Messvorrichtung eine separate Vorrichtung sein, welche mit der Steuereinheit verbunden ist.

In bevorzugter Weise ist die Steuereinheit dazu eingerichtet, zumindest einige der oben genannten Verfahrensschritte, insbesondere das zuvor erwähnte Koppeln mit der Fahrleitung und/oder das zuvor erwähnte Entkoppeln von der Fahrleitung, auszuführen oder zu veranlassen.

Die Steuereinheit kann dazu eingerichtet sein, eine oder mehrere Schaltvorrichtungen des Fahrzeugs, insbesondere den zuvor erwähnten Trennschalter, zu steuern.

Zweckmäßigerweise umfasst die Steuereinheit einen Datenspeicher zum Speichern eines Computerprogramms. Weiter ist es zweckmäßig, wenn die Steuereinheit einen Prozessor zum Ausführen eines Computerprogramms aufweist.

Im Datenspeicher der Steuereinheit ist vorzugsweise ein von ihrem Prozessor ausführbares Computerprogramm hinterlegt, welches die Steuereinheit dazu befähigt, das Fahrzeug bzw. dessen Komponenten zu steuern. Der besagte Spannungsschwellwert ist zweckmäßigerweise in der Steuereinheit, insbesondere in deren Datenspeicher, hinterlegt.

Die bisher gegebene Beschreibung bevorzugter Ausgestaltungen der Erfindung enthält zahlreiche Merkmale, die in den einzelnen abhängigen Patentansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und dem erfindungsgemäßen Fahrzeug kombinierbar. Ferner können Verfahrensmerkmale auch als Eigenschaft der entsprechenden Vorrichtungseinheit angesehen werden.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Figuren näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

### Es zeigen:

- FIG 1: ein erstes Schienenfahrzeug, welches zwei Traktionsanlagen, einen Energiespeicher sowie eine Steuereinheit umfasst;
- FIG 2: ein zweites Schienenfahrzeug, welches zwei Traktionsanlagen, zwei Energiespeicher sowie eine Steuereinheit umfasst.

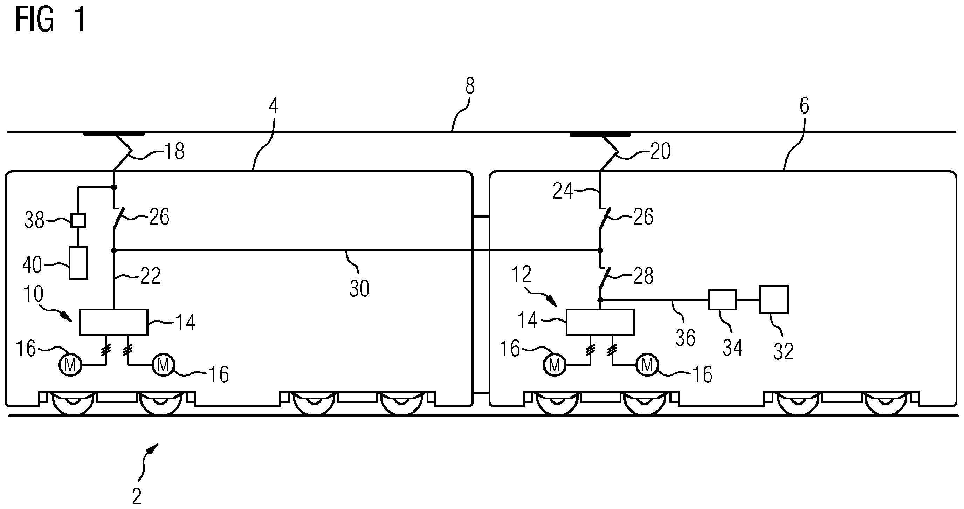

FIG 1 zeigt schematisch ein Fahrzeug 2 mit einem ersten Wagen 4 sowie einem zweiten Wagen 6, der an den ersten Wagen 4 gekoppelt ist. Bei dem Fahrzeug 2 handelt es sich im vorliegenden Ausführungsbeispiel um ein Schienenfahrzeug, insbesondere um ein Schienenfahrzeug zur Personenbeförderung.

Zusätzlich zu den beiden zuvor erwähnten Wagen 4, 6 kann das Fahrzeug 2 gegebenenfalls einen oder mehrere weitere Wagen aufweisen. Solche gegebenenfalls vorhandenen weiteren Wagen sind figürlich nicht dargestellt. Zudem wird der Einfachheit halber auf solche gegebenenfalls vorhandenen weiteren Wagen in der nachfolgenden Beschreibung nicht weiter eingegangen. Ferner zeigt FIG 1 eine Fahrleitung 8 zur Versorgung des Fahrzeugs 2 mit elektrischer Energie. Bei der Fahrleitung 8 handelt es sich im vorliegenden Ausführungsbeispiel um eine Oberleitung, welche eine Gleichspannung bereitstellt.

Das Fahrzeug 2 ist mit einer ersten Traktionsanlage 10 sowie mit einer zweiten Traktionsanlage 12 ausgestattet. Wie aus FIG 1 ersichtlich ist, ist die erste Traktionsanlage 10 im ersten Wagen 4 des Fahrzeugs 2 angeordnet, wohingegen die zweite Traktionsanlage 12 im zweiten Wagen 6 des Fahrzeugs 2 angeordnet ist.

Beide Traktionsanlagen 10, 12 umfassen jeweils einen Traktionsstromrichter 14. Im vorliegenden Ausführungsbeispiel umfasst die jeweilige Traktionsanlage 10, 12 außerdem zwei mit ihrem Traktionsstromrichter 14 verbundene Traktionsmotoren 16, welche insbesondere als Drehstrom-Asynchronmotoren ausgebildet sind.

Weiter weist das Fahrzeug 2 einen ersten Stromabnehmer 18 sowie einen zweiten Stromabnehmer 20 auf. Der erste Stromabnehmer 18 ist eine Komponente des ersten Wagens 4, während der zweite Stromabnehmer 20 eine Komponente des zweiten Wagens 6 ist.

Ferner weist das Fahrzeug 2 eine erste Energieübertragungsleitung 22 sowie eine zweite Energieübertragungsleitung 24 auf. Die erste Energieübertragungsleitung 22 ist einenends mit dem ersten Stromabnehmer 18 und anderenends mit der ersten Traktionsanlage 10, genauer gesagt mit deren Traktionsstromrichter 14, verbunden. Entsprechend ist die zweite Energieübertragungsleitung 24 einenends mit dem zweiten Stromabnehmer 20 und anderenends mit der zweiten Traktionsanlage 12, genauer gesagt mit deren Traktionsstromrichter 14, verbunden.

Beide Energieübertragungsleitungen 22, 24 weisen jeweils einen Hauptschalter 26 auf. Die zweite Energieübertragungsleitung 24 weist außerdem einen Trennschalter 28 auf, der zwischen dem Hauptschalter 26 der zweiten Energieübertragungsleitung 24 und der zweiten Traktionsanlage 12 angeordnet ist. Vorzugsweise ist der Trennschalter 28 ein elektrisch betätigbarer Schalter.

Des Weiteren weist das Fahrzeug 2 eine Verbindungsleitung 30 auf, durch welche die beiden Energieübertragungsleitungen 22, 24 miteinander verbunden sind. Einenends ist die Verbindungsleitung 30 an die erste Energieübertragungsleitung 22 angeschlossen. Anderenends ist die Verbindungsleitung 30 an die zweite Energieübertragungsleitung 24 angeschlossen, und zwar zwischen den Trennschalter 28 und den Hauptschalter 26 der zweiten Energieübertragungsleitung 24.

Darüber hinaus umfasst das Fahrzeug 2 einen wiederaufladbaren Energiespeicher 32 zum Speichern elektrischer Energie. Hierbei handelt es sich im vorliegenden Ausführungsbeispiel um eine galvanische Zelle, einen Kondensator oder eine Zusammenschaltung mehrerer solcher Elemente.

Zudem weist das Fahrzeug 2 einen Umrichter 34, insbesondere einen Gleichspannungswandler, auf. Der Umrichter 34 ist über eine Anschlussleitung 36 mit der zweiten Energieübertragungsleitung 24 verbunden, wobei diese Anschlussleitung 36 zwischen dem Trennschalter 28 der zweiten Energieübertragungsleitung 24 und der zweiten Traktionsanlage 12 an die zweite Energieübertragungsleitung 24 angeschlossen ist. Der Energiespeicher 32 ist über die Anschlussleitung 36 - unter Zwischenschaltung des zuvor erwähnten Umrichters 34 - mit der zweiten Energieübertragungsleitung 24 verbunden.

Wenn mindestens einer der beiden Hauptschalter 26 der Energieübertragungsleitungen 22, 24 geschlossen ist, ist die erste Traktionsanlage 10 elektrisch an die Fahrleitung 8 gekoppelt. Sind hingegen beide Hauptschalter 26 geöffnet, ist die erste Traktionsanlage 10 elektrisch von der Fahrleitung 8 entkoppelt.

Die zweite Traktionsanlage 12 ist elektrisch an die Fahrleitung 8 gekoppelt, wenn der Trennschalter 28 der zweiten Energieübertragungsleitung 24 sowie mindestens einer der beiden Hauptschalter 26 geschlossen sind. Sind beide Hauptschalter 26 geöffnet und/oder ist der Trennschalter 28 geöffnet, so ist die zweite Traktionsanlage 12 elektrisch von der Fahrleitung 8 entkoppelt.

Wenn die zweite Traktionsanlage 12 an die Fahrleitung 8 gekoppelt ist, kann der Energiespeicher 32 - sofern der Energiespeicher 32 nicht bereits vollständig geladen ist - mit elektrischer Energie aus der Fahrleitung 8 geladen werden.

Ferner kann der Energiespeicher 32 - sofern der Energiespeicher 32 nicht bereits vollständig geladen ist - während eines Bremsvorgangs des Fahrzeugs 2 mit elektrischer Bremsenergie geladen werden, die mithilfe der zweiten Traktionsanlage 12 gewonnen wird. Ist während des Bremsvorgangs die zweite Traktionsanlage 12 elektrisch an die Fahrleitung 8 gekoppelt, kann zumindest ein Teil der mithilfe der zweiten Traktionsanlage 12 gewonnenen Bremsenergie in die Fahrleitung 8 eingespeist werden.

Des Weiteren umfasst das Fahrzeug 2 eine Messvorrichtung 38 zum Überwachen der von der Fahrleitung 8 bereitgestellten Netzspannung sowie eine mit der Messvorrichtung 38 verbundene Steuereinheit 40. Im vorliegenden Ausführungsbeispiel ist die Messvorrichtung 38 mit der ersten Energieübertragungsleitung 22 verbunden.

Die Steuereinheit 40 ist über eine figürlich nicht dargestellte Steuerleitung mit dem Trennschalter 28 der zweiten Energieübertragungsleitung 24 verbunden. Ferner ist die Steuereinheit 40 dazu eingerichtet, den Trennschalter 28 zu steuern. Das heißt, die Steuereinheit 40 kann den Trennschalter 28 öffnen bzw. schließen, indem die Steuereinheit 40 einen entsprechenden Steuerbefehl an den Trennschalter 28 übermittelt. Gegebenenfalls kann die Steuereinheit 40 über weitere figürlich nicht dargestellte Steuerleitungen mit den beiden Hauptschaltern 26 der Energieübertragungsleitungen 22, 24 verbunden sein und dazu eingerichtet sein, die Hauptschalter 26 zu steuern.

Besagte Messvorrichtung 38 misst die von der Fahrleitung 8 bereitgestellte Netzspannung und übermittelt die dabei gewonnenen Messwerte an die Steuereinheit 40. Die Steuereinheit 40 steuert den Trennschalter 28 in Abhängigkeit der Netzspannung.

Ist die von der Fahrleitung 8 bereitgestellte Netzspannung mindestens so groß wie ein vorgegebener, in der Steuereinheit 40 hinterlegter Spannungsschwellwert, sind beide Traktionsanlagen 10, 12 elektrisch an die Fahrleitung 8 gekoppelt. In diesem Zustand werden beide Traktionsanlagen 10, 12, sofern das Fahrzeug 2 keine Bremsung ausführt, über die Fahrleitung 8 mit elektrischer Energie versorgt.

Fällt - ausgehend von dem zuvor genannten Zustand - die Netzspannung auf einen Spannungswert ab, der unterhalb des vorgegebenen Spannungsschwellwerts liegt, bleibt die erste Traktionsanlage 10 an die Fahrleitung 8 gekoppelt, wohingegen die zweite Traktionsanlage 12 elektrisch von der Fahrleitung 8 entkoppelt wird, indem der Trennschalter 28 der zweiten Energieübertragungsleitung 24 geöffnet wird. In diesem Zustand wird, sofern das Fahrzeug 2 keine Bremsung ausführt, die erste Traktionsanlage 10 weiterhin mit elektrischer Energie aus der Fahrleitung 8 versorgt, wohingegen die zweite Traktionsanlage 12 mit elektrischer Energie aus dem Energiespeicher 32 versorgt wird. Auf diese Weise kann trotz des Abfalls der Netzspannung vermieden werden, dass die Traktionsleistung des Fahrzeugs 2 abnimmt. Ferner wird durch die Entkopplung der zweiten Traktionsanlage 12 von der Fahrleitung 8 verhindert, dass elektrische Energie aus dem Energiespeicher 32 in die Fahrleitung 8 (zurück-)fließen kann.

Auch dann, wenn die zweite Traktionsanlage 12 elektrisch von der Fahrleitung 8 entkoppelt ist, bleibt die erste Traktionsanlage 10 dank der Verbindungsleitung 30 mit dem zweiten Stromabnehmer 20 verbunden. Folglich ist es der ersten Traktionsanlage 10 möglich, über beide Stromabnehmer 18, 20 elektrische Energie aus der Fahrleitung 8 beziehen. Auf diese Weise kann die erste Traktionsanlage 10 - verglichen mit dem Fall, dass die erste Traktionsanlage 10 vom zweiten Stromabnehmer 20 getrennt ist/wird - einen höheren Strom aus der Fahrleitung 8 ziehen.

Falls die abgefallene Netzspannung wieder auf einen Spannungswert steigt, der mindestens so groß ist wie der vorgegebene Spannungsschwellwert, wird die von der Fahrleitung 8 entkoppelte zweite Traktionsanlage 12 durch Schließen des Trennschalters 28 wieder an die Fahrleitung 8 gekoppelt, sodass die zweite Traktionsanlage 12 mit elektrischer Energie aus der Fahrleitung 8 versorgt werden kann.

Die Beschreibung des nachfolgenden Ausführungsbeispiels beschränkt sich primär auf die Unterschiede zum Ausführungsbeispiel aus FIG 1, auf das bezüglich gleicher Merkmale und Funktionen verwiesen wird. Gleiche und/oder einander entsprechende Elemente sind, soweit zweckdienlich, mit den gleichen Bezugszeichen bezeichnet und nicht erwähnte Merkmale sind im nachfolgenden Ausführungsbeispiel übernommen, ohne dass sie erneut beschrieben werden.

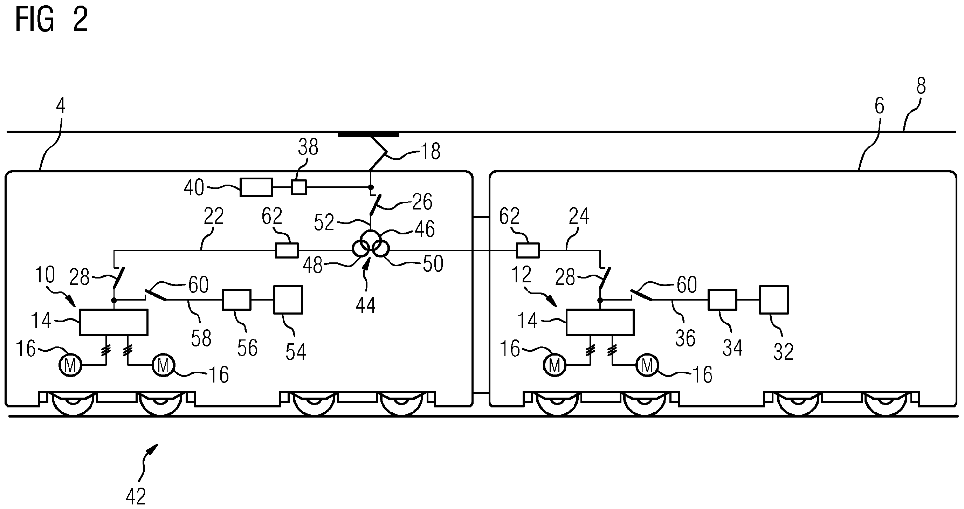

FIG 2 zeigt schematisch ein weiteres als Schienenfahrzeug ausgebildetes Fahrzeug 42, das einen ersten Wagen 4 und einen zweiten Wagen 6 umfasst.

Ferner zeigt FIG 2 eine Fahrleitung 8 zur Versorgung des Fahrzeugs 42 mit elektrischer Energie. Bei der Fahrleitung 8 handelt es sich im vorliegenden Ausführungsbeispiel um eine Oberleitung, welche eine Wechselspannung bereitstellt.

Bei dem Fahrzeug 42 aus FIG 2 weist nur der erste Wagen 4 einen Stromabnehmer 18 auf. Außerdem weist das Fahrzeug 42 einen Transformator 44 mit einer Primärwicklung 46, einer ersten Sekundärwicklung 48 sowie einer zweiten Sekundärwicklung 50 auf.

Das Fahrzeug 42 umfasst eine erste Energieübertragungsleitung 22, über welche die erste Traktionsanlage 10 des Fahrzeugs 42 mit der ersten Sekundärwicklung 48 des Transformators 44 verbunden ist, sowie eine zweite Energieübertragungsleitung 24, über welche die zweite Traktionsanlage 12 des Fahrzeugs 42 mit der zweiten Sekundärwicklung 50 des Transformators 44 verbunden ist. Die erste und die zweite Energieübertragungsleitung 22, 24 weisen jeweils einen Trennschalter 28 auf.

Ferner umfasst das Fahrzeug 42 eine dritte Energieübertragungsleitung 52, die einenends mit dem Stromabnehmer 18 verbunden ist, anderenends mit der Primärwicklung 46 des Transformators 44 verbunden ist und zudem einen Hauptschalter 26 aufweist. Die Messvorrichtung 38 des Fahrzeugs 42 ist mit dieser Energieübertragungsleitung 52 verbunden.

Wie das Fahrzeug 2 aus FIG 1 umfasst das Fahrzeug 42 aus FIG 2 einen (ersten) wiederaufladbaren Energiespeicher 32 zum Speichern elektrischer Energie. Außerdem umfasst das Fahrzeug 42 einen weiteren wiederaufladbaren Energiespeicher 54 zum Speichern elektrischer Energie sowie einen weiteren Umrichter 56, insbesondere einen Gleichspannungswandler. Der weitere Umrichter 56 ist über eine weitere Anschlussleitung 58 mit der ersten Energieübertragungsleitung 22 verbunden, wobei diese Anschlussleitung 58 zwischen dem Trennschalter 28 der ersten Energieübertragungsleitung 22 und der ersten Traktionsanlage 10 an die erste Energieübertragungsleitung 22 angeschlossen ist. Zudem ist der weitere Energiespeicher 54 über die weitere Anschlussleitung 58 - unter Zwischenschaltung des weiteren Umrichters 56 - mit der ersten Energieübertragungsleitung 22 verbunden.

Im vorliegenden Ausführungsbeispiel weisen sowohl die erste Anschlussleitung 36, welche den ersten Energiespeicher 32 mit der zweiten Energieübertragungsleitung 24 verbindet, als auch die weitere Anschlussleitung 58, welche den weiteren Energiespeicher 54 mit der ersten Energieübertragungsleitung 22 verbindet, jeweils einen Trennschalter 60 auf.

Ist der Trennschalter 60 der ersten Anschlussleitung 36 geöffnet, so ist die zweite Traktionsanlage 12 elektrisch vom ersten Energiespeicher 32 entkoppelt. Wenn der Trennschalter 60 der ersten Anschlussleitung 36 hingegen geschlossen ist, ist die zweite Traktionsanlage 12 elektrisch an den ersten Energiespeicher 32 gekoppelt. Entsprechend ist die erste Traktionsanlage 10 elektrisch vom weiteren Energiespeicher 54 entkoppelt, wenn der Trennschalter 60 der weiteren Anschlussleitung 58 geöffnet ist. Ist der Trennschalter 60 der weiteren Anschlussleitung 58 hingegen geschlossen, so ist die erste Traktionsanlage 10 elektrisch an den weiteren Energiespeicher 54 gekoppelt.

Die Steuereinheit 40 ist über figürlich nicht dargestellte Steuerleitungen sowohl mit den Trennschaltern 28 der ersten und zweiten Energieübertragungsleitung 22, 24 als auch mit den Trennschaltern 60 der Anschlussleitungen 36, 58 verbunden. Zudem ist die Steuereinheit 40 dazu eingerichtet, diese Trennschalter 28, 60 in Abhängigkeit der Netzspannung zu steuern.

Darüber hinaus weist das Fahrzeug 42 zwei zusätzliche Umrichter 62 auf, von denen einer zwischen die erste Sekundärwicklung 48 des Transformators 44 und die erste Traktionsanlage 10 geschaltet ist und der andere zwischen die zweite Sekundärwicklung 50 des Transformators 44 und die zweite Traktionsanlage 12 geschaltet ist.

Bei dem Fahrzeug 42 aus FIG 2 ist die erste Traktionsanlage 10 elektrisch an die Fahrleitung 8 gekoppelt, wenn der Hauptschalter 26 und der Trennschalter 28 der ersten Energieübertragungsleitung 22 geschlossen sind. Ist hingegen mindestens einer dieser beiden Schalter geöffnet, ist die erste Traktionsanlage 10 elektrisch von der Fahrleitung 8 entkoppelt.

Wenn der Hauptschalter 26 sowie der Trennschalter 28 der zweiten Energieübertragungsleitung 24 geschlossen sind, ist die zweite Traktionsanlage 12 elektrisch an die Fahrleitung 8 gekoppelt. Falls mindestens einer dieser beiden Schalter geöffnet ist, ist die erste Traktionsanlage 12 elektrisch von der Fahrleitung 8 entkoppelt.

Ist die von der Fahrleitung 8 bereitgestellte Netzspannung mindestens so groß wie ein vorgegebener, in der Steuereinheit 40 hinterlegter Spannungsschwellwert, sind beide Traktionsanlagen 10, 12 elektrisch an die Fahrleitung 8 gekoppelt. In diesem Zustand werden beide Traktionsanlagen 10, 12 über die Fahrleitung 8 mit elektrischer Energie versorgt, sofern das Fahrzeug 42 keine Bremsung ausführt.

Fällt - ausgehend von dem zuvor genannten Zustand - die Netzspannung auf einen Spannungswert ab, der unterhalb des vorgegebenen Spannungsschwellwerts liegt, bleibt die erste Traktionsanlage 10 an die Fahrleitung 8 gekoppelt, wohingegen die zweite Traktionsanlage 12 elektrisch von der Fahrleitung 8 entkoppelt, indem der Trennschalter 28 der zweiten Energieübertragungsleitung 24 geöffnet wird. Zudem wird der Trennschalter 60 der ersten Anschlussleitung 36 geschlossen, sofern dieser Trennschalter nicht bereits geschlossen ist. Damit elektrische Energie aus dem weiteren Energiespeicher 54 nicht in die Fahrleitung 8 (zurück-)fließen kann, wird der Trennschalter 60 der weiteren Anschlussleitung 58 geöffnet, sofern dieser Trennschalter nicht bereits geöffnet ist. In diesem Zustand wird, sofern das Fahrzeug 42 keine Bremsung ausführt, die erste Traktionsanlage 10 weiterhin mit elektrischer Energie aus der Fahrleitung 8 versorgt, wohingegen die zweite Traktionsanlage 12 mit elektrischer Energie aus dem ersten Energiespeicher 32 versorgt wird.

Die Steuereinheit 40 überwacht die Ladezustände der beiden Energiespeicher 32, 54. Unterschreitet der Ladezustand des ersten Energiespeichers 32 einen vorgegebenen Ladezustandsschwellwert, wird die erste Traktionsanlage 10 elektrisch von der Fahrleitung 8 entkoppelt, indem der Trennschalter 28 der ersten Energieübertragungsleitung 22 geöffnet wird. Zudem wird die zweite Traktionsanlage 12 wieder elektrisch an die Fahrleitung 8 gekoppelt, indem der Trennschalter 28 der zweiten Energieübertragungsleitung 24 wieder geschlossen wird. Zusätzlich wird der Trennschalter 60 der weiteren Anschlussleitung 58 geschlossen, während der Trennschalter 60 der ersten Anschlussleitung 36 geschlossen wird. In diesem Zustand wird, sofern das Fahrzeug 42 keine Bremsung ausführt, die erste Traktionsanlage 10 nunmehr mit elektrischer Energie aus dem weiteren Energiespeicher 54 versorgt, wohingegen die zweite Traktionsanlage 12 wieder mit elektrischer Energie aus der Fahrleitung 8 versorgt wird. Auf diese Weise kann selbst dann, wenn der Ladezustand des ersten Energiespeichers 32 den vorgegebenen Ladezustandsschwellwert unterschreitet, vermieden werden, dass die Traktionsleistung des Fahrzeugs 2 abnimmt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

## Patentansprüche

1. Verfahren zum Betreiben eines Fahrzeugs (2, 42), bei dem das Fahrzeug (2, 42) eine erste und eine zweite Traktionsanlage (10, 12) mit jeweils mindestens einem elektrischen Traktionsmotor (16) aufweist und eine von einer Fahrleitung (8) bereitgestellte Netzspannung überwacht wird, wobei die Netzspannung zunächst mindestens so groß ist wie ein vorgegebener Spannungsschwellwert und dann auf einen Spannungswert abfällt, der unterhalb des vorgegebenen Spannungsschwellwerts liegt,
wobei
- beide Traktionsanlagen (10, 12) elektrisch an die Fahrleitung (8) gekoppelt sind, während die Netzspannung mindestens so groß ist wie der vorgegebene Spannungsschwellwert, und **dadurch gekennzeichnet dass**
- bei oder nach Abfall der Netzspannung auf den unterhalb des vorgegebenen Spannungsschwellwerts liegenden Spannungswert die erste Traktionsanlage (10) elektrisch an die Fahrleitung (8) gekoppelt bleibt und mit elektrischer Energie aus der Fahrleitung (8) versorgt wird, wohingegen die zweite Traktionsanlage (12) elektrisch von der Fahrleitung (8) entkoppelt wird und von einem Energiespeicher (32) des Fahrzeugs (2, 42) mit elektrischer Energie versorgt wird.

2. Verfahren nach Anspruch 1,
**dadurch gekennzeichnet, dass** das Fahrzeug (2, 42) einen Trennschalter (28) aufweist, wobei die zweite Traktionsanlage (12) mithilfe des Trennschalters (28) elektrisch von der Fahrleitung (8) entkoppelt wird.

3. Verfahren nach Anspruch 1 oder 2,
**dadurch gekennzeichnet, dass** das Fahrzeug (2) einen ersten Stromabnehmer (18) zum Versorgen der ersten Traktionsanlage (10) mit elektrischer Energie aus der Fahrleitung (8) sowie einen zweiten Stromabnehmer (20) zum Versorgen der zweiten Traktionsanlage (12) mit elektrischer Energie aus der Fahrleitung (8) umfasst, wobei die erste Traktionsanlage (10) über beide Stromabnehmer (18, 20) mit elektrische Energie aus der Fahrleitung (8) versorgt wird, wenn die zweite Traktionsanlage (12) elektrisch von der Fahrleitung (8) entkoppelt ist.

4. Verfahren nach einem der voranstehenden Ansprüche, **dadurch gekennzeichnet, dass** der Energiespeicher (32) ein wiederaufladbarer Energiespeicher ist, wobei der Energiespeicher (32) mittels elektrischer Energie aus der Fahrleitung (8) geladen wird, falls die zweite Traktionsanlage (12) elektrisch an die Fahrleitung (8) gekoppelt ist.

5. Verfahren nach einem der voranstehenden Ansprüche, **dadurch gekennzeichnet, dass** der Energiespeicher (32) ein wiederaufladbarer Energiespeicher ist, wobei der Energiespeicher (32) während eines Bremsvorgangs des Fahrzeugs (2, 42) mittels elektrischer Bremsenergie geladen wird.

6. Verfahren nach einem der voranstehenden Ansprüche, **dadurch gekennzeichnet, dass**, falls die auf den unterhalb des vorgegebenen Spannungsschwellwerts liegenden Spannungswert abgefallene Netzspannung wieder auf einen Spannungswert steigt, der mindestens so groß ist wie der vorgegebene Spannungsschwellwert, die von der Fahrleitung (8) entkoppelte zweite Traktionsanlage (12) wieder an die Fahrleitung (8) gekoppelt wird.

7. Verfahren nach einem der voranstehenden Ansprüche, **dadurch gekennzeichnet, dass**, falls die Netzspannung unterhalb des vorgegebenen Spannungsschwellwerts liegt und zudem ein vorgegebenes Umschaltkriterium erfüllt ist, die zweite Traktionsanlage (12) wieder elektrisch an die Fahrleitung (8) gekoppelt wird und mit elektrischer Energie aus der Fahrleitung (8) versorgt wird, wohingegen die erste Traktionsanlage (10) elektrisch von der Fahrleitung (8) entkoppelt wird und von einem weiteren Energiespeicher (54) des Fahrzeugs (42) mit elektrischer Energie versorgt wird.

8. Verfahren nach Anspruch 7,
**dadurch gekennzeichnet, dass** das Umschaltkriterium eine Bedingung bezüglich eines Ladezustands des erstgenannten Energiespeichers (32) ist.

9. Fahrzeug (2, 42), umfassend eine erste und eine zweite Traktionsanlage (10, 12), die jeweils mindestens einen elektrischen Traktionsmotor (16) aufweisen, sowie eine Messvorrichtung (38) zum Überwachen einer von einer Fahrleitung (8) bereitgestellten Netzspannung,
und
einen Energiespeicher (32) sowie eine Steuereinheit (40), welche dazu eingerichtet ist, das Fahrzeug (2, 42) so zu steuern, dass ausgehend von einem Ausgangszustand, in dem die Netzspannung mindestens so groß ist wie ein vorgegebener Spannungsschwellwert und beide Traktionsanlagen (10, 12) elektrisch an die Fahrleitung (8) gekoppelt sind, **dadurch gekennzeichnet dass** bei oder nach Abfall der Netzspannung auf einen unterhalb des vorgegebenen Spannungsschwellwerts liegenden Spannungswert die erste Traktionsanlage (10) elektrisch an die Fahrleitung (8) gekoppelt bleibt und die zweite Traktionsanlage (12) elektrisch von der Fahrleitung (8) entkoppelt wird, sodass die erste Traktionsanlage (10) mit elektrischer Energie aus der Fahrleitung (8) versorgbar ist und die zweite Traktionsanlage (12) vom Energiespeicher (32) mit elektrischer Energie versorgbar ist.

10. Fahrzeug (2, 42) nach Anspruch 9,
wobei das Fahrzeug (2, 42) ein Schienenfahrzeug ist.

## Claims

1. Method for operating a vehicle (2, 42), in which the vehicle (2, 42) has a first and a second traction system (10, 12), each having at least one electric traction motor (16), and a mains voltage provided by a contact line (8) is monitored, wherein the mains voltage is initially at least as high as a predetermined voltage threshold value and then drops to a voltage value that is below the predetermined voltage threshold value,
wherein
- both traction systems (10, 12) are electrically coupled to the contact line (8), while the main voltage is at least as high as the predetermined voltage threshold value, and **characterised in that**
- at or after the mains voltage drop to the voltage value below the predetermined voltage threshold value, the first traction system (10) remains electrically coupled to the contact line (8) and is supplied with electrical energy from the contact line (8), whereas the second traction system (12) is electrically decoupled from the contact line (8) and is supplied with electrical energy from an energy storage (32) of the vehicle (2, 42).

2. Method according to claim 1,
**characterised in that** the vehicle (2, 42) has an isolating switch (28), wherein the second traction system (12) is electrically decoupled from the contact line (8) with the aid of the isolating switch (28).

3. Method according to claim 1 or 2,
**characterised in that** the vehicle (2) has a first current collector (18) for supplying the first traction system (10) with electrical energy from the contact line (8), and a second current collector (20) for supplying the second traction system (12) with electrical energy from the contact line (8), wherein the first traction system (10) is supplied with electrical energy from the contact line (8) via both current collectors (18, 20) when the second traction system (12) is electrically decoupled from the contact line (8).

4. Method according to one of the preceding claims, **characterised in that** the energy storage (32) is a rechargeable energy storage, wherein the energy storage (32) is charged by means of electrical energy from the contact line (8) if the second traction system (12) is electrically coupled to the contact line (8).

5. Method according to one of the preceding claims, **characterised in that** the energy storage (32) is a rechargeable energy storage, wherein the energy storage (32) is charged by means of electrical braking energy during a braking operation of the vehicle (2, 42).

6. Method according to one of the preceding claims, **characterised in that** if the mains voltage, which has dropped to the voltage value below the predetermined voltage threshold value, rises again to a voltage value that is at least as high as the predetermined voltage threshold value, the second traction system (12) decoupled from the contact line (8) is again coupled to the contact line (8).

7. Method according to one of the preceding claims, **characterised in that** if the mains voltage is below the predetermined voltage threshold value and a predetermined switchover criterion is furthermore met, the second traction system (12) is again electrically coupled to the contact line (8) and is supplied with electrical energy from the contact line (8), whereas the first traction system (10) is electrically decoupled from the contact line (8) and is supplied with electrical energy from a further energy storage (54) of the vehicle (42).

8. Method according to claim 7,
**characterised in that** the switchover criterion is a condition relating to a charging state of the first-mentioned energy storage (32).

9. Vehicle (2, 42), comprising a first and a second traction system (10, 12), each having at least one electric traction motor (16), and a measuring device (38) for monitoring a mains voltage provided by a contact line (8),
and an energy storage (32), as well as a control unit (40) which is designed to control the vehicle (2, 42) such that, starting from an initial state in which the mains voltage is at least as high as a predetermined voltage threshold value, and both traction systems (10, 12) are electrically coupled to the contact line (8), **characterised in that** at or after the mains voltage drop to a voltage value below the predetermined voltage threshold value, the first traction system (10) remains electrically coupled to the contact line (8) and the second traction system (12) is electrically decoupled from the contact line (8), such that the first traction system (10) can be supplied with electrical energy from the contact line (8) and the second traction system (12) can be supplied with electrical energy from the energy storage (32).

10. Vehicle (2, 42) according to claim 9,
wherein the vehicle (2, 42) is a rail vehicle.

## Revendications

1. Procédé pour faire fonctionner un véhicule (2, 42), dans lequel le véhicule (2, 42) a un premier et un deuxième système (10, 12) de traction, ayant chacun au moins un moteur (16) de traction électrique et on contrôle une tension de réseau mise à disposition par une caténaire (8), dans lequel la tension du réseau est d'abord au moins aussi haute qu'une valeur de seuil de tension donnée à l'avance et s'abaisse ensuite à une valeur de tension, qui est en dessous de la valeur de seuil de tension donnée à l'avance,
dans lequel
- les deux systèmes (10, 12) de traction sont reliés électriquement à la caténaire (8) pendant que la tension du réseau est au moins aussi haute que la valeur de seuil de tension donnée à l'avance
et **caractérisé en ce que**,
- lors de la chute ou après la chute de la tension du réseau à la valeur de tension se trouvant en-dessous de la valeur de seuil de tension donnée à l'avance, le premier système (10) de traction reste relié électriquement à la caténaire (8) et est alimenté en énergie électrique à partir de la caténaire (8), tandis que le deuxième système (12) de traction est découplé électriquement de la caténaire (8) et est alimenté en énergie électrique par un accumulateur (32) d'énergie du véhicule (2, 42).

2. Procédé suivant la revendication 1,
**caractérisé en ce que** le véhicule (2, 42) a un sectionneur (28), le deuxième système (12) de traction est découplé électriquement de la caténaire (8), à l'aide du sectionneur (28).

3. Procédé suivant la revendication 1 ou 2,
**caractérisé en ce que** le véhicule (2) comprend un premier appareil (18) de prise de courant pour l'alimentation du premier système (10) de traction en énergie électrique à partir de la caténaire (8), ainsi qu'un deuxième appareil (20) de prise de courant pour l'alimentation du deuxième système (12) de traction en énergie électrique à partir de la caténaire (8), le premier système (10) de traction étant alimenté en énergie électrique à partir de la caténaire (8) par les deux appareils (18, 20) de prise de courant, si le deuxième système (12) de traction est découplé électriquement de la caténaire (8).

4. Procédé suivant l'une des revendications précédentes, **caractérisé en ce que** l'accumulateur (32) d'énergie est un accumulateur d'énergie rechargeable, l'accumulateur (32) d'énergie étant rechargé au moyen d'énergie électrique de la caténaire (8), si le deuxième système (12) de traction est relié électriquement à la caténaire (8).

5. Procédé suivant l'une des revendications précédentes, **caractérisé en ce que** l'accumulateur (32) d'énergie est un accumulateur d'énergie rechargeable, l'accumulateur (32) d'énergie étant chargé au moyen d'énergie électrique de freinage pendant une opération de freinage du véhicule (2, 42).

6. Procédé suivant l'une des revendications précédentes, **caractérisé en ce que**, si la tension du réseau, qui s'est abaissée à la valeur de tension en-dessous de la valeur de seuil de tension donnée à l'avance, s'élève à nouveau à une valeur de tension, qui est au moins aussi haute que la valeur de seuil de tension données à l'avance, on relie à nouveau à la caténaire (8) le deuxième système (12)de traction découplé de la caténaire (8).

7. Procédé suivant l'une des revendications précédente, **caractérisé en ce que**, si la tension du réseau se trouve en dessous de la valeur de seuil de tension donnée à l'avance et si, en outre, un critère de commutation donné à l'avance est satisfait, on relie le deuxième système (12) de traction à nouveau électriquement à la caténaire (8) et on l'alimente en énergie électrique à partir de la caténaire (8), tandis que l'on découple le premier système (10) de traction électriquement de la caténaire (8) et on l'alimente en énergie électrique par un autre accumulateur (54) d'énergie du véhicule (42).

8. Procédé suivant la revendication 7,
**caractérisé en ce que** le critère de commutation est une condition concernant un état de charge de l'accumulateur (32) d'énergie mentionné en premier.

9. Véhicule (2, 42), comprenant un premier et un deuxième systèmes (10, 12) de traction, qui ont chacun au moins un moteur (16) de traction électrique, ainsi qu'un dispositif (38) de mesure pour contrôler une tension du réseau mise à disposition par une caténaire (8) et un accumulateur (32) d'énergie, ainsi qu'une unité (40) de commande, qui est conçue pour commander le véhicule (2, 42), de manière à ce que, à partir d'un état initial, dans lequel la tension du réseau est au moins aussi haute qu'une valeur de seuil de tension donnée à l'avance et les deux systèmes (10, 12) de traction sont reliés électriquement à la caténaire (8), **caractérisé en ce que**
lors d'une chute ou après une chute de la tension du réseau à une valeur de tension se trouvant en dessous de la valeur de seuil de tension donnée à l'avance, le premier système (10) de traction reste relié électriquement à la caténaire (8) et le deuxième système (12) de traction est découplé de la caténaire (8), de sorte que le premier système (10) de traction puisse être alimenté en énergie électrique à partir de la caténaire (8) et que le deuxième système (12) de traction puisse être alimenté en énergie électrique par l'accumulateur (32) d'énergie.

10. Véhicule (2, 42) suivant la revendication 9,
dans lequel le véhicule (2, 42) est un véhicule ferroviaire.
